# EUROPÄISCHE PATENTSCHRIFT

(11) **EP 0 977 056 B1**
(45) Veröffentlichungstag und Bekanntmachung des Hinweises auf die Patenterteilung: **29.03.2006**
(21) Anmeldenummer: 99113091.5
(22) Anmeldetag: 06.07.1999
(51) Int. Cl.: G01V 3/12, G01S 13/36

(54) **Verfahren und Vorrichtung zum Bestimmen einer Intensität eines eine Messstrecke passiert habenden Radarsignals**
Method and apparatus determining the intensity of a radar signal having passed a measuring range
Procédé et dispositif pour déterminer l'intensité d'un signal radar après le passage d'une section de mesure

(30) Priorität: 28.07.1998 DE 19833965
(43) Veröffentlichungstag der Anmeldung: 02.02.2000
(73) Patentinhaber: SIEMENS AKTIENGESELLSCHAFT, 80333 München (DE)
(72) Erfinder: Heide, Patric, Dr., 85579 Neubiberg (DE)

(56) Entgegenhaltungen:
- US-A- 4 205 316
- US-A- 4 238 795
- US-A- 4 937 580

## Beschreibung

Verfahren und Vorrichtung zum Bestimmen einer Intensität eines eine Meßstrecke passiert habenden Radarsignals.

Die Erfindung betrifft ein Verfahren zum Bestimmen einer Intensität eines eine Meßstrecke passiert habenden Radarsignals, umfassend Erzeugen des Radarsignals und Senden des Radarsignals über die Meßstrecke, Empfangen des die Meßstrecke passiert habenden Radarsignals und Bestimmen der Intensität des die Meßstrecke passiert habenden Radarsignals durch geeignetes Messen. Die Erfindung betrifft außerdem eine entsprechende Vorrichtung zum Bestimmen einer Intensität eines eine Meßstrecke passiert habenden Radarsignals, umfassend einen Sender, eine Antennenanordnung, einen Empfänger und eine geeignete Meßschaltung.

Ein solches Verfahren und eine solche Vorrichtung gehen hervor aus einem Prospekt der Endress und Hauser Meßtechnik GmbH und Co., Maulburg, DE, betreffend einen Sender QR30 und einen Empfänger DR30, mit welchen gemeinsam eine sog. Radarschranke aufgebaut werden kann. Bei einer Radarschranke wird von einem zugehörigen Sender ein Radarsignal über eine Meßstrecke gesandt und von einem geeignet positionierten Empfänger empfangen. Eine Intensität des empfangenen Radarsignals wird bestimmt, und aus dieser Intensität wird ermittelt, ob sich auf der Meßstrecke eine absorbierende Masse befindet. Eine solche absorbierende Masse kann je nach Anwendung ein kompaktes Erzeugnis sein. Es ist auch je nach Anwendungsfall eine absorbierende Masse in Form eines fließfähigen Erzeugnisses denk-bar. Ein typisches Einsatzgebiet für eine Radarschranke ist eine Fördereinrichtung in einer Industrieanlage. Ein anderes Anwendungsgebiet ist die Überwachung eines Eingangs oder Ausgangs zu einem kritischen Raumbereich in einem Gebäude; in diesem Fall wäre als absorbierende Masse ein Mensch anzusehen, der den Eingang oder Ausgang benutzen möchte. Es versteht sich, daß eine derartige Anwendung unter Einhaltung gewisser Sicherheitsvorschriften erfolgen muß.

Aus der DE 44 29 118 C2 geht ein Radarsensor hervor, welcher zur Bestimmung eines Ortes und/oder einer Geschwindigkeit eines Meßobjektes geeignet ist. Dieser Radarsensor ist ausgebildet zur Erzielung einer hohen Empfindlichkeit.

Die WO 97/09637 A2 und die WO 97/09638 A2 betreffen jeweils eine Vorrichtung zur Abstandsmessung mittels Radar. Jede Vorrichtung erfordert die Bereitstellung des zur Abstandsmessung erforderlichen Radarsignals mit einer Frequenz, welche sich gemäß einer spezifischen Vorgabe ändert. Die Vorrichtung gemäß WO 97/09637 A2 ist dabei besonders ausgebildet zum Ausgleich einer eventuell vorhandenen Nichtlinearität in der Variation der Frequenz des Radarsignals. Die Vorrichtung gemäß WO 97/09638 A2 ist besonders ausgebildet, um eine Abstandsmessung auch bei einem vergleichsweise hohen Abstand des jeweiligen Meßobjektes von der Vorrichtung zu ermöglichen.

US 4205316 offenbart auch eine Radar - Entferonungsmess ein richtung.

Der Einsatz einer Radarschranke anstelle einer herkömmlichen mechanischen oder optischen Schranke ist für manche Anwendung von großem Interesse. Problematisch ist allerdings, daß die Funktion einer Radarschranke beeinträchtigt werden kann, wenn zum Senden oder zum Empfangen des Radarsignals lediglich eine einfache und kostengünstige, freilich keine hohe Richtwirkung habende Antenne zum Einsatz kommt. In einem solchen Fall kann es vorkommen, daß ein Radarsignal nicht nur auf einem eigentlich ausersehenen direkten Weg vom Sender zum Empfänger gelangt, sondern zusätzlich noch auf einem Umweg; etwa dann, wenn neben dem eigentlichen Meßobjekt ein zweites Objekt vorhanden ist und einen Teil des Radarsignals, welches beispielsweise über eine Nebenkeule der zum Senden verwendeten Antenne zu ihm gelangt ist, zum Empfänger reflektiert. Dadurch kann es zu verschiedenen Störeffekten kommen; das Signal im Empfänger kann durch Überlagerung ganz oder teilweise ausgelöscht werden, es ist auch denkbar, daß ein durch das eigentliche Meßobjekt verursachter Schwächungseffekt im empfangenen Radarsignal durch ein störendes Signal verdeckt wird.

Dementsprechend ist es die Aufgabe der Erfindung, ein Verfahren und eine Vorrichtung der eingangs definierten Art anzugeben, mit dem bzw. mit der eine Beeinflussung des Ergebnisses der angestrebten Messung durch ein über einen anderen Weg als die ausersehene Meßstrecke empfangenes Störsignal vermieden ist.

Zur Lösung der auf ein Verfahren bezogenen Aufgabe angegeben wird ein Verfahren, nach Anspruch 1, zum Bestimmen einer Intensität eines eine Meßstrecke passiert habenden Radarsignals, umfassend:
Erzeugen des Radarsignals mit einer weitgehend linear sich verändernden Frequenz;
Erzeugen eines Referenzsignals, welches phasenstarr mit dem Radarsignal verkoppelt ist;
Senden des Radarsignals über die Meßstrecke;
Empfangen des die Meßstrecke passiert habenden Radarsignals;
Mischen des die Meßstrecke passiert habenden Radarsignals mit dem Referenzsignal unter Erzeugung eines Mischsignals;
Bandpaßfiltern des Mischsignals und Abtrennen eines eine dem Radarsignal, dem Referenzsignal und der Meßstrecke zugehörige Sollfrequenz habenden Meßsignals; und
Bestimmen der Intensität des die Meßstrecke passiert habenden Radarsignals durch Messen einer Intensität des Meßsignals.

Gemäß der Erfindung wird ein Radarsignal benutzt, dessen Frequenz sich in bestimmter Weise verändert. Dies hat zur Konsequenz, daß ein von einem entsprechenden Empfänger empfangenes Radarsignal eine von der Frequenz des zum Zeitpunkt des Empfangs ausgesendeten Radarsignals entsprechend seiner Laufzeit zwischen dem Sender und dem Empfänger abweichende Frequenz hat. Diese Abweichung entspricht einem der Länge der ausersehenen Meßstrecke entsprechenden Sollwert, falls das Signal direkt über die Meßstrecke vom Sender zum Empfänger gelangt ist und hat einen von dem Sollwert mehr oder weniger abweichenden Wert, wenn es über eine von der Meßstrecke abweichenden, in der Regel längeren Weg vom Sender zum Empfänger gelangt ist. Dementsprechend wird aus dem beim Empfänger ankommenden Gemisch von Signalen jedwedes Signal ausgeblendet, welches eine von dem Sollwert wesentlich abweichende Frequenz hat; es bedarf dazu lediglich eines Bandfilters. Die Intensität des vom Bandfilter allein durchgelassenen Meßsignals wird nachfolgend bestimmt und gibt die Intensität desjenigen Teils des Radarsignals, welcher wie gewünscht die vorgegebene Meßstrecke passiert hat, wieder. Dementsprechend kommt es zur Ausübung des Verfahrens nicht mehr an auf die Verwendung einer spezifischen richtscharfen Antennenanordnung. Die notwendige Veränderung der Frequenz des Radarsignals muß nicht unbedingt einer hohen Linearitätsanforderung genügen. Eine Nichtlinearität macht sich allenfalls bemerkbar durch eine mehr oder weniger große Schwankung der Frequenz des Meßsignals, dessen Intensität bestimmt werden soll. Es ist lediglich dafür Sorge zu tragen, daß diese Schwankung innerhalb der Durchlaßbandbreite des Bandfilters bleibt, damit es nicht zu einer Verfälschung des Meßergebnisses aufgrund der Durchlaßcharakteristik des Bandfilters kommt. Man erkennt allerdings, daß die Zuverlässigkeit der Messung um so höher ist, je geringer die Schwankung der Frequenz des Meßsignals ausfällt. Eine ähnliche Erwägung gilt für die Anforderung, daß das Referenzsignal "phasenstarr" mit dem Radarsignal verkoppelt sein müsse. Die erfindungsgemäß unbedingt notwendige Verkoppelung schließt nicht aus, daß es eine gewisse beschränkte Schwankung der Phasen der genannten Signale gegeneinander gibt, da auch eine solche Schwankung sich im wesentlichen nur in einer entsprechenden Schwankung der Frequenz des Meßsignals äußern würde. Wiederum aber ist zur Erreichung einer möglichst hohen Zuverlässigkeit der Messung eine weitgehende Verminderung der Schwankung anzustreben.

Für die Ausführung des notwendigen Bandfilters gibt es eine Vielzahl von Möglichkeiten. Das Bandfilter kann, gegebenenfalls unter geeigneter Wahl des Sollwertes für die Frequenz des Meßsignals, in altbekannter analoger Technik aufgebaut und gegebenenfalls als mechanisches Filter, Quarzfilter oder Oberflächenwellenfilter ausgeführt sein. Denkbar ist auch die Verwendung eines digitalen Filters oder die Verwendung eines Signalprozessors, worin das Bandfilter mittels geeigneter, an sich bekannter Software ausgebildet ist.

Eine bevorzugte Weiterbildung des Verfahrens zeichnet sich dadurch aus, daß das Erzeugen des Referenzsignals in einer phasenstarren Schleife erfolgt, welcher das Radarsignal als Vorgabesignal zugeführt wird. Diese Weiterbildung erschließt die Anwendung der an sich bekannten Technologie der phasenstarren Schleifen (PLL) für die Erfindung. Für diese Technologie stehen handelsübliche integrierte Schaltkreise zur Verfügung, so daß sich weitere diesbezügliche Ausführungen an dieser Stelle erübrigen.

Alternativ kann das Referenzsignal auch erzeugt werden durch Auskoppeln aus dem Radarsignal; mit anderen Worten wird im wesentlichen das Radarsignal selbst als Referenzsignal verwendet. Diese Verwendung kann erfolgen in der Weise, daß das aus dem Radarsignal ausgekoppelte Referenzsignal erst nach einer gewissen zeitlichen Verzögerung dem Mischer im Empfänger zum Mischen mit dem die Meßstrecke passiert habenden Radarsignal zugeführt wird. Diese Verzögerung impliziert eine Verschiebung der Frequenz des Referenzsignals, was zur Einstellung des Sollwertes gemäß einer entsprechenden Vorgabe von Bedeutung sein kann. In diesem Zusammenhang ist folgende zusätzliche Weiterbildung von Interesse: Der Sender und der Empfänger werden nicht räumlich voneinander getrennt, so daß der Sender an einem ersten, der Empfänger an einem zweiten Ende der Meßstrecke postiert wird. Vielmehr werden Sender und Empfänger mit einer entsprechenden Antennenanordnung, die sowohl zum Senden als auch zum Empfangen geeignet ist, an einem ersten Ende der Meßstrecke angeordnet, und an einem zweiten Ende der Meßstrecke wird ein Reflektor für das Radarsignal aufgestellt. Dieses passiert die Meßstrecke zwischen dem Sender und dem Empfänger nicht einmal, sondern zweimal. Da der Sender und der Empfänger nicht wesentlich räumlich voneinander entfernt sind, entfällt das Erfordernis, zwischen dem Sender und Empfänger eine zusätzliche Leitung oder dergl. vorzusehen, um die notwendige feste Phasenbeziehung zwischen dem Radarsignal und dem Referenzsignal herzustellen. Dagegen kann die gesamte Elektronik zum Senden, Empfangen und Auswerten des Radarsignals an einem Ort konzentriert werden, was auch aus anwendungstechnischer Sicht von Bedeutung ist.

Eine weitere Variante zur Erzeugung des Radarsignals und des damit in fester Phasenbeziehung stehenden Referenzsignals besteht darin, ein gemeinsames Taktsignal vorzugeben, insbesondere mit einer Frequenz, welche wesentlich geringer ist als die zur Bildung eines üblichen Radarsignals erforderliche Frequenz, und dieses Taktsignal zur Bildung des Radarsignals bzw. des Referenzsignals jeweils zu vervielfachen. Entsprechende elektronische Schaltungen sind an sich bekannt und bedürfen an dieser Stelle keiner weiteren Erläuterung. Weiterhin bevorzugt ist es, das Taktsignal so zu erzeugen, gegebenenfalls mittels eines entsprechenden Modulators, daß es die für das Radarsignal gewünschte weitgehend sich linear ändernde Frequenz hat. Dieses Taktsignal kann beispielsweise über zwei Koaxialkabel ohne weiteres und insbesondere ohne die Gefahr einer störenden Beeinflussung und ohne die Inkaufnahme einer wesentlichen Dämpfung dem Sender bzw. dem Referenzgeber zugeführt werden.

Das Verfahren wird zweckmäßig eingesetzt, indem aus der Intensität des die Meßstrecke passiert habenden Radarsignals bestimmt wird, ob sich eine absorbierende Masse auf der Meßstrecke befindet; in dieser Ausgestaltung ist das Verfahren ein Betriebsverfahren für eine Radarschranke.

Zur Lösung der auf eine Vorrichtung bezogenen Aufgabe angegeben wird eine Vorrichtung zum Bestimmen einer Intensität eines eine Meßstrecke passiert habenden Radarsignals, umfassend:
einen Sender zum Erzeugen des Radarsignals mit einer weitgehend linear sich verändernden Frequenz;
einen Referenzgeber zum Erzeugen eines Referenzsignals, welches phasenstarr mit dem Radarsignal verkoppelt ist;
eine Antennenanordnung zum Senden des Radarsignals über die Meßstrecke und Empfangen des die Meßstrecke passiert habenden Radarsignals;
einen Empfänger mit einem Mischer zum Mischen des die Meßstrecke passiert habenden Radarsignals mit dem Referenzsignal zum Erzeugen eines Mischsignals;
einen Bandpaß zum Bandpaßfiltern des Mischsignals und Abtrennen eines eine dem Radarsignal, dem Referenzsignal und der Meßstrecke zugehörigen Sollfrequenz habenden Meßsignals;
einer Meßschaltung zum Bestimmen der Intensität des die Meßstrecke passiert habenden Radarsignals durch Messen einer Intensität des Meßsignals.

Wesentliche Vorteile dieser Vorrichtung erschließen sich aus den vorstehenden Ausführungen zum Verfahren, zu dessen Ausführung die Vorrichtung geeignet ist, worauf hiermit verwiesen wird. Bevorzugte Weiterbildungen dieser Vorrichtung entsprechen vorstehend angegebenen bevorzugten Weiterbildungen des Verfahrens und sind in entsprechenden abhängigen Patentansprüchen gekennzeichnet, auf welche hiermit ebenfalls verwiesen wird. Außerdem sind bevorzugte Weiterbildungen der Vorrichtung erkennbar aus der nachfolgenden Beschreibung bevorzugter Ausführungsbeispiele der Erfindung, worauf ebenfalls verwiesen wird.

Es folgt nun eine Beschreibung bevorzugter Ausführungsbeispiele der Erfindung anhand der Zeichnung. Die Darstellungen der Zeichnung sind schematische Skizzen von Vorrichtungen, deren praktische Realisierung in Anwendung der Kenntnisse einer einschlägig bewanderten Fachperson obliegt.

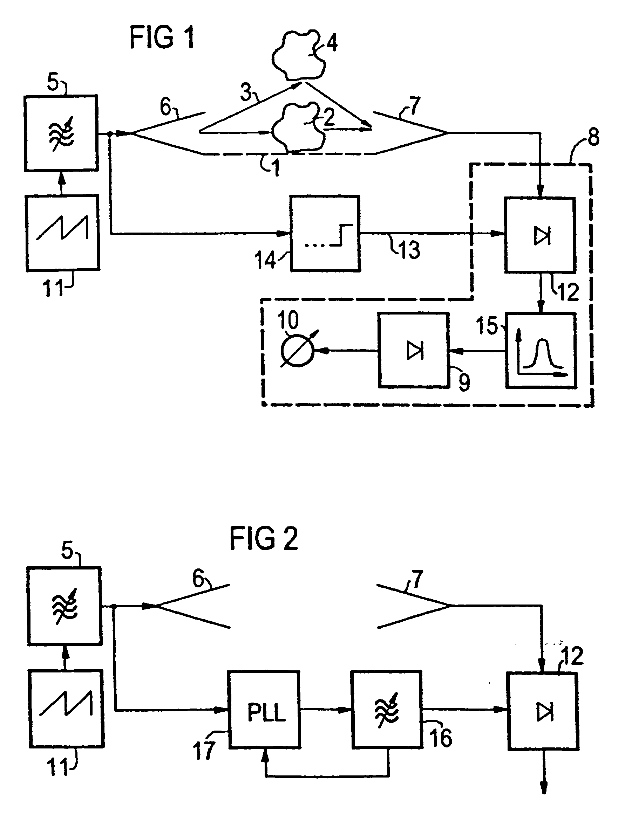

Jede der vier Figuren zeigt ein Ausführungsbeispiel einer Vorrichtung zum Bestimmen einer Intensität eines eine Meßstrecke passiert habenden Radarsignals. Die komplette Vorrichtung ist der Übersicht halber nur in Figur 1 dargesellt; die Figuren 2 bis 4 enthalten nur noch die die für die jeweils dargestellte Ausführung besondere Bedeutung habenden Elemente.

Figur 1 zeigt eine Vorrichtung zum Bestimmen einer Intensität eines eine Meßstrecke 1 passiert habenden Radarsignals, welche zu einer Radarschranke gehört. Funktionelle Aufgabe der Radarschranke ist es festzustellen, ob sich auf der Meßstrekke 1 eine Mikrowellen absorbierende Masse 2 befindet. Die Anwesenheit einer solchen Masse 2 macht sich bemerkbar an einer deutlichen Schwächung des die Meßstrecke 1 passierenden Radarsignals. Zu einer Verfälschung dieser Bestimmung kann es kommen, wenn ein weiteres Radarsignal über einen Umweg 3 abseits der Meßstrecke 1 an einer weiteren absorbierenden Masse 4 abgelenkt und zusammen mit dem die Meßstrecke 1 passiert habenden Radarsignal nachgewiesen wird. Vorliegend geht es darum, eine Störung beim Bestimmen einer Intensität des die Meßstrecke 1 passiert habenden Radarsignals zu vermeiden.

Es seien zunächst die wesentlichen Bestandteile einer herkömmlichen entsprechenden Vorrichtung erläutert: Die Vorrichtung hat einen Sender 5, in welchem das Radarsignal erzeugt wird. Von dem Sender 5 gelangt es zu einer Sendeantenne 6 und wird aus dieser über die Meßstrecke 1 zu einer Empfangsantenne 7 zu einem Empfänger 8 geleitet. Dieser beinhaltet eine Meßschaltung 9, 10 mit einem Gleichrichter 9 und einem Anzeigegerät 10, hier symbolhaft als übliches Meßgerät dargestellt, zur Messung einer Intensität entsprechend der Intensität des die Meßstrecke 1 passiert habenden Radarsignals.

Um eine Störung der Messung durch ein über den Umweg 3 gelangtes weiteres Radarsignal zu verhindern, ist der Sender 5 zunächst so eingerichtet, daß er das Radarsignal mit einer weitgehend linear sich verändernden Frequenz erzeugt. Zu diesem Zweck ist ein Sendemodulator 11 vorgesehen, welcher den Sender 5 entsprechend steuert, beispielsweise indem er eine elektrisch einstellbare Abstimmeinrichtung des Senders 5 (an sich bekannt) mittels einer sägezahnförmigen Wechselspannung steuert. Des weiteren weist der Empfänger 8 einen Mischer 12 auf, dem neben dem von der Empfangsantenne 7 empfangenen, die Meßstrecke 1 passiert habenden Radarsignal ein Referenzsignal zugeführt wird. Das Referenzsignal ist ausgekoppelt aus dem Radarsignal und gelangt über eine Referenzleitung 13, die insoweit den erforderlichen Referenzgeber darstellt, zu dem Mischer 12. In die Referenzleitung 13 eingefügt ist ein Verzögerungselement 14. In dem Mischer 12 entsteht aus dem die Meßstrecke 1 passiert habenden Radarsignal und dem Referenzsignal ein Mischsignal, in welchem eine Mehrzahl von Frequenzen vorhanden ist. Dieses Mischsignal wird einem Bandpaßfilter 15 zugeführt, und in diesem Bandpaßfilter 15 wird aus dem Mischsignal ein eine Frequenz entsprechend einem dem Radarsignal, dem Referenzsignal und der Meßstrecke zugehörigen Sollwert habendes Meßsignal abgetrennt. Dieser Sollwert entspricht im wesentlichen einer Differenz aus der Frequenz des Referenzsignals und einer Frequenz des die Meßstrecke 1 passiert habenden Radarsignals unter der Voraussetzung, daß das Radarsignal tatsächlich entlang der Meßstrecke 1 sich ausgebreitet hat. Ein über einen Umweg 3 zur Empfangsantenne 7 gelangtes Radarsignal hat einen Weg zurückgelegt, welcher länger ist als die Meßstrecke 1, und hat dementsprechend eine andere Frequenz. Diese andere Frequenz entspricht nach Mischung mit dem Referenzsignal nicht dem vorgegebenen Sollwert, und das entsprechende Signal wird daher von dem Bandfilter 15 nicht bis zum Gleichrichter 9 der Meßschaltung 9, 10 durchgelassen. Das vom Bandfilter 15 zum Gleichrichter 9 durchgelassene Meßsignal ist durch seine dem Sollwert entsprechende Frequenz ausgezeichnet als zugehörig zu einem Radarsignal, welches sich genau entlang der Meßstrecke 1 ausgebreitet hat. Seine von der Meßschaltung 9, 10 bestimmte Intensität ist daher ein zuverlässiges Maß für die Intensität des die Meßstrecke 1 passiert habenden Radarsignals.

Als Radarfrequenz für die Vorrichtung gemäß Figur 1 wird eine Frequenz im Bereich von 24 GHz bevorzugt. Die Variation der Frequenz des Radarsignals erfolgt bevorzugtermaßen über ein Intervall mit einer Breite von 200 MHz.

Die Vorrichtung gemäß Figur 2 unterscheidet sich von der Vorrichtung gemäß Figur 1 durch die Erzeugung des Referenzsignals. Dazu vorgesehen ist nämlich ein Referenzgeber 16 in Form eines separaten Referenzoszillators 16. Dieser ist einbezogen in eine phasenstarre Schleife und in dieser verbunden mit einer PLL-Schaltung 17, wie sie handelsüblich erhältlich ist. Der PLL-Schaltung 17 wird das Radarsignal bzw. ein aus diesem ausgekoppeltes Vorgabesignal zugeführt und die PLL-Schaltung stellt den Referenzoszillator 16 so ein, daß das von ihm erzeugte Referenzsignal in einer festen Phasenbeziehung zum Radarsignal steht.

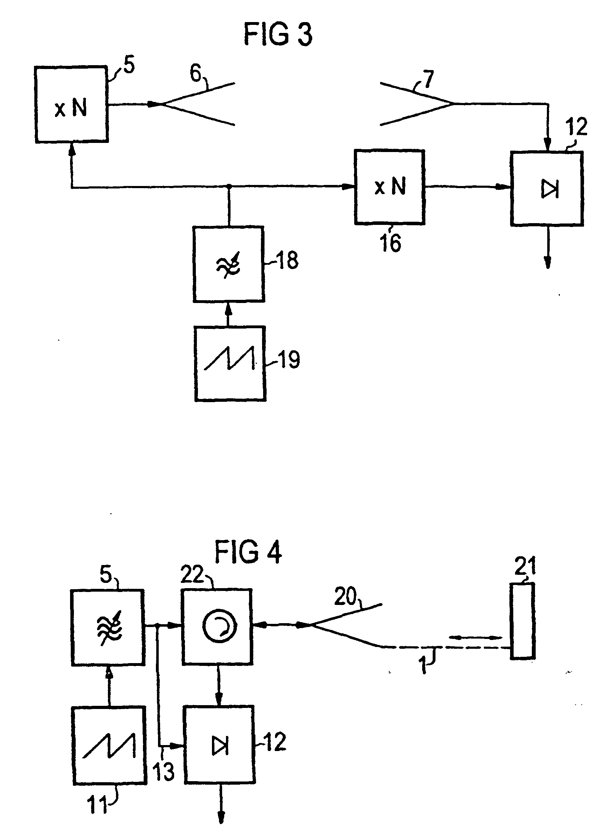

Auch die Figur 3 zeigt eine Abwandlung der Vorrichtung gemäß Figur 1, wobei der Unterschied in der Erzeugung des Radarsignals und der Erzeugung des Referenzsignals liegt. Zur Erzeugung beider Signale ist nämlich ein Taktoszillator 18 vorgesehen, der ein Taktsignal sowohl an den Sender 5 als auch an den Referenzoszillator 16 gibt. Der Taktoszillator 18 wird moduliert von einem Taktmodulator 19. Sowohl der Sender 5 als auch der Referenzoszillator 16 sind ausgestaltet als Vervielfacher und erzeugen jeweils ein Signal, welches einem bestimmten ganzahligen Vielfachen des Taktsignals entspricht. Im übrigen entspricht die Funktion der Vorrichtung gemäß Figur 3 der Funktion der Vorrichtung gemäß Figur 1. Die Ausgestaltung gemäß Figur 3 hat den Vorzug, daß die notwendige gemeinsame Zeitbasis für den Sender 5 und den Referenzoszillator 16 geschaffen wird über ein Taktsignal, welches eine bedeutend geringere Frequenz als die Frequenz des zu erzeugenden Radarsignals besitzt und dementsprechend mit bedeutend geringerem Aufwand und auf bedeutend sicherere Weise, etwa mit Hilfe von Koaxialkabeln, zum Sender 5 bzw. zum Referenzoszillator 16 geführt werden kann. In einer vergleichsweise "rauhen" Umgebung, wie z.B. einer industriellen Fertigungsanlage, wird man daher der Ausgestaltung gemäß Figur 3 besonderen Vorzug geben.

Figur 4 zeigt ebenfalls eine Abwandlung der Vorrichtung gemäß Figur 1 mit Besonderheiten. Zunächst ist anstelle einer Antennenanordnung mit einer Senderantenne 6 und einer davon entlang der Meßstrecke 1 distanzierten Empfangsantenne 7 nur eine Anordnung mit einer einzigen Antenne 20, die sowohl zum Senden als auch zum Empfangen dient, vorgesehen. Diese einzige Antenne 20 ist angeordnet an einem ersten Ende der Meßstrecke, und an einem zweiten Ende der Meßstrecke 1 befindet sich ein Reflektor 21, welcher ein von der einzigen Antenne 20 ausgesandtes, einfallendes Radarsignal zur einzigen Antenne 20 zurückwirft. Zur Abtrennung eines zu sendenden von einem empfangenen Radarsignal ist an der einzigen Antenne 20 ein Zirkulator 22, ein an sich bekanntes Mikrowellenbauelement, vorgesehen. Dieser Zirkulator 22 führt ein Signal vom Sender 5 zur Antenne 20 und ein Signal von der Antenne 20 zum Mischer 12. Der Mischer 12 erhält als Referenzsignal ein aus dem Radarsignal über die Referenzleitung 13 ausgekoppeltes Signal. Gegebenenfalls kann die Referenzleitung 13 ein Verzögerungselement 14 enthalten, wie aus Figur 1 erkennbar; insoweit ist auf eine Vorgabe für den Sollwert der Frequenz des hinsichtlich seiner Intensität auszuwertenden Meßsignals Bedacht zu nehmen.

Im Sinne der Erfindung wird eine räumliche Selektivität einer Vorrichtung zur Bestimmung einer Intensität eines eine Meßstrecke passiert habenden Radarsignals dadurch erreicht, daß jedwedes in der Vorrichtung empfangene Signal mit einer von seinem Ausbreitungsweg abhängigen Frequenz wahrgenommen wird.

Dadurch ist unter Benutzung eines Bandfilters eine Diskrimination hinsichtlich des Ausbreitungsweges eines Radarsignals möglich, und dadurch wird eine von der Richtwirkung einer eventuell eingesetzten Antenne unabhängige räumliche Selektivität erreicht.

## Patentansprüche

1. Verfahren zum Bestimmen einer Intensität eines eine Meßstrecke (1) passiert habenden Radarsignals, umfassend:
Erzeugen des Radarsignals mit einer weitgehend linear sich verändernden Frequenz;
Erzeugen eines Referenzsignals, welches phasenstarr mit dem Radarsignal verkoppelt ist;
Senden des Radarsignals über die Meßstrecke (1);
Empfangen des die Meßstrecke (1) passiert habenden Radarsignals;
Mischen des die Meßstrecke (1) passiert habenden Radarsignals mit dem Referenzsignal unter Erzeugung eines Mischsignals;
Bandpaßfiltern des Mischsignals und Abtrennen eines eine Frequenz entsprechend einem dem Radarsignal, dem Referenzsignal und der Meßstrecke zugehörigen Sollwert habenden Meßsignals; und
Bestimmen der Intensität des die Meßstrecke (1) passiert habenden Radarsignals durch Messen einer Intensität des Meßsignals.

2. Verfahren nach Anspruch 1, bei dem das Erzeugen des Referenzsignals in einer phasenstarren Schleife (16, 17) erfolgt, welcher das Radarsignal als Vorgabesignal zugeführt wird.

3. Verfahren nach Anspruch 1, bei dem das Referenzsignal erzeugt wird durch Auskoppeln aus dem Radarsignal.

4. Verfahren nach Anspruch 3, bei dem das die Meßstrecke (1) ein erstes Mal passiert habende Radarsignal reflektiert wird, die Meßstrecke (1) ein zweites Mal passiert und zu einem Empfänger (8) im räumlicher Nähe zu einem Sender (5), von welchem das Radarsignal ausgesendet wurde, gelangt.

5. Verfahren nach Anspruch 1, bei dem das Radarsignal und das Referenzsignal erzeugt werden durch jeweiliges Vervielfachen eines gemeinsamen Taktsignals.

6. Verfahren nach einem der vorigen Ansprüche, bei dem aus der Intensität des die Meßstrecke (1) passiert habenden Radarsignals bestimmt wird, ob sich eine absorbierende Masse (2) auf der Meßstrecke (1) befindet.

7. Vorrichtung zum Bestimmen einer Intensität eines eine Meßstrecke (1) passiert habenden Radarsignals, umfassend:
einen Sender (5) zum Erzeugen des Radarsignals mit einer weitgehend linear sich verändernden Frequenz;
einen Referenzgeber (13, 16) zum Erzeugen eines Referenzsignals, welches phasenstarr mit dem Radarsignal verkoppelt ist;
eine Antennenanordnung (6, 7, 20, 21, 22) zum Senden des Radarsignals über die Meßstrecke (1) und Empfangen des die Meßstrecke (1) passiert habenden Radarsignals;
einen Empfänger (8) mit einem Mischer (12) zum Mischen des die Meßstrecke (1) passiert habenden Radarsignals mit dem Referenzsignal zum Erzeugen eines Mischsignals;
einen Bandpaß (15) zum Bandpaßfiltern des Mischsignals und Abtrennen eines eine Frequenz entsprechend einem dem Radarsignal, dem Referenzsignal und der Meßstrecke (1) zugehörigen Sollwert habenden Meßsignals;
einer Meßschaltung (9, 10) zum Bestimmen der Intensität des die Meßstrecke (1) passiert habenden Radarsignals durch Messen einer Intensität des Meßsignals.

8. Vorrichtung nach Anspruch 7, bei der der Referenzgeber (13, 16) eine phasenstarre Schleife (16, 17) zum Erzeugen des Referenzsignals enthält.

9. Vorrichtung nach Anspruch 7, bei der der Referenzgeber (13, 16) eine an den Sender (5) gekoppelte Referenzleitung (13) zum Auskoppeln des Referenzsignals aus dem Radarsignal enthält.

10. Vorrichtung nach Anspruch 9, bei der die Referenzleitung (13) ein Verzögerungselement (14) enthält.

11. Vorrichtung nach Anspruch 9 oder 10, bei der die Antennenanordnung (6, 7, 20, 21, 22) einen Reflektor (21) umfaßt, durch welchen das von dem Sender (5) gesendete und die Meßstrecke (1) ein erstes Mal passiert habende Radarsignal reflektierbar ist, so daß es die Meßstrecke (1) ein zweites Mal passiert, und bei der der Empfänger (8) in räumlicher Nähe zum Sender (5) angeordnet ist.

12. Vorrichtung nach Anspruch 7, welche einen Taktgeber (18) enthält, durch welchen ein Taktsignal sowohl zum Sender (5) als auch zum Referenzgeber (13, 16) leitbar ist, und bei der sowohl der Sender (5) als auch der Referenzgeber (13, 16) jeweils einen Vervielfacher aufweisen, durch welchen das Radarsignal und das Referenzsignal mittels jeweiliger Vervielfachung des Taktsignals erzeugbar sind.

13. Vorrichtung nach Anspruch 12, welche einen dem Taktgeber (18) zugeordneten Taktmodulator (19) zum Erzeugen des Taktsignals mit einer weitgehend linear sich verändernden Taktfrequenz aufweist.

14. Vorrichtung nach einem der Ansprüche 7 bis 12, welche einen den Sender (5) zugeordneten Sendemodulator (11) aufweist.

15. Vorrichtung nach einem der Ansprüche 7 bis 14, welche als Radarschranke ausgebildet ist.

## Revendications

1. Procédé pour déterminer une intensité d'un signal radar qui a traversé une section de mesure (1), comprenant:
la génération du signal radar avec une fréquence qui se modifie de manière largement linéaire;
la génération d'un signal de référence qui est couplé au signal radar avec verrouillage de phase;
l'émission du signal radar sur la section de mesure (1);
la réception du signal radar qui a traversé la section de mesure (1);
le mélange du signal radar qui a traversé la section de mesure (1) et du signal de référence avec génération d'un signal mixte;
le filtrage passe-bande du signal mixte et la séparation d'un signal de mesure ayant une fréquence de consigne associée au signal radar, au signal de référence et à la section de mesure et
la détermination de l'intensité du signal radar qui a traversé la section de mesure (1) par mesure d'une intensité du signal de mesure.

2. Procédé selon la revendication 1, dans lequel la génération du signal de référence se fait dans une boucle (16, 17) verrouillée en phase à laquelle le signal radar est amené en tant que signal par défaut.

3. Procédé selon la revendication 1, dans lequel le signal de référence est généré par découplage à partir du signal radar.

4. Procédé selon la revendication 3, dans lequel le signal radar qui a traversé une première fois la section de mesure (1) est réfléchi, traverse la section de mesure (1) une deuxième fois et arrive à un récepteur (8) à proximité spatiale d'un émetteur (5) par lequel le signal radar a été émis.

5. Procédé selon la revendication 1, dans lequel le signal radar et le signal de référence sont générés par multiplication respective d'un signal d'horloge commun.

6. Procédé selon l'une des revendications précédentes, dans lequel on détermine, à partir de l'intensité du signal radar qui a traversé la section de mesure (1), si une masse absorbante (2) se trouve sur la section de mesure (1).

7. Dispositif pour déterminer une intensité d'un signal radar qui a traversé une section de mesure (1), comprenant:
un émetteur (5) pour générer le signal radar avec une fréquence qui se modifie de manière largement linéaire;
un générateur de référence (13, 16) pour générer un signal de référence qui est couplé avec le signal radar avec verrouillage de phase;
un ensemble d'antennes (6, 7, 20, 21, 22) pour émettre le signal radar par l'intermédiaire de la section de mesure (1) et recevoir le signal radar qui a traversé la section de mesure (1);
un récepteur (8) avec un mélangeur (12) pour mélanger le signal radar qui a traversé la section de mesure (1) avec le signal de référence pour générer un signal mixte;
un passe-bande (15) pour le filtrage passe-bande du signal mixte et la séparation d'un signal de,mesure ayant une fréquence de consigne associée au signal radar, au signal de référence et à la section de mesure (1) et
un circuit de mesure (9, 10) pour déterminer l'intensité du signal radar qui a traversé la section de mesure (1) par mesure d'une intensité du signal de mesure.

8. Dispositif selon la revendication 7, dans lequel le générateur de référence (13, 16) contient une boucle verrouillée en phase (16, 17) pour générer le signal de référence.

9. Dispositif selon la revendication 7, dans lequel le générateur de référence (13, 16) contient une ligne de référence (13) couplée à l'émetteur (5) pour découpler le signal de référence à partir du signal radar.

10. Dispositif selon la revendication 9, dans lequel la ligne de référence (13) contient un élément de retard (14).

11. Dispositif selon la revendication 9 ou 10, dans lequel l'ensemble d'antennes (6, 7, 20, 21, 22) comprend un réflecteur (21) par lequel le signal radar émis par l'émetteur (5) et qui a traversé une première fois la section de mesure (1) peut être réfléchi, de sorte qu'il traverse la section de mesure (1) une deuxième fois, et dans lequel le récepteur (8) est situé à proximité spatiale de l'émetteur (5).

12. Dispositif selon la revendication 7, contenant un générateur d'horloge (18) par lequel un signal d'horloge peut être amené non seulement à l'émetteur (5), mais aussi au générateur de référence (13, 16), et dans lequel non seulement l'émetteur (5), mais aussi le générateur de référence (13, 16) comportent respectivement un multiplicateur par lequel le signal radar et le signal de référence peuvent être générés au moyen d'une multiplication respective du signal d'horloge.

13. Dispositif selon la revendication 12, lequel comporte un modulateur d'horloge (19) affecté au générateur d'horloge (18) pour générer le signal d'horloge avec une fréquence d'horloge qui se modifie de manière largement linéaire.

14. Dispositif selon l'une des revendications 7 à 12, lequel comporte un modulateur d'émission (11) affecté à l'émetteur (5).

15. Dispositif selon l'une des revendications 7 à 14, lequel est réalisé en tant que barrière radar.

## Claims

1. Method for determining an intensity of a radar signal having passed a measuring section (1), comprising:
generating the radar signal with a largely linearly varying frequency;
generating a reference signal which is phase-locked to the radar signal;
transmitting the radar signal over the measuring section (1);
receiving the radar signal having passed the measuring section (1);
mixing the radar signal having passed the measuring section (1) with the reference signal to produce a mixed signal;
bandpass filtering the mixed signal and extracting a measurement signal having a nominal value associated with a frequency corresponding to the radar signal, the reference signal and the measuring section; and
determining the intensity of the radar signal having passed the measuring section (1) by measuring an intensity of the measurement signal.

2. Method according to claim 1, in which generation of the reference signal takes place in a phase-locked loop (16, 17) to which the radar signal is fed as setpoint signal.

3. Method according to claim 1, in which the reference signal is generated by coupling out from the radar signal.

4. Method according to claim 3, in which the radar signal having passed the measuring section (1) a first time is reflected, passes the measuring section (1) a second time and is fed to a receiver (8) in spatial proximity to a transmitter (5) from which the radar signal was transmitted.

5. Method according to claim 1, in which the radar signal and the reference signal are produced by respective multiplication of a common clock signal.

6. Method according to one of the preceding claims, in which it is determined from the intensity of the radar signal having passed the measuring section (1) whether an absorbing mass (2) is present on the measuring section (1).

7. System for determining an intensity of a radar signal having passed a measuring section (1), comprising:
a transmitter (5) for generating the radar signal with a largely linearly varying frequency;
a reference trigger (13, 16) for generating a reference signal which is phase-locked to the radar signal;
an antenna arrangement (6, 7, 20, 21, 22) for transmitting the radar signal over the measuring section (1) and receiving the radar signal having passed the measuring section (1);
a receiver (8) with a mixer for mixing the radar signal having passed the measuring section (1) with the reference signal to generate a mixed signal;
a bandpass filter (15) for bandpass filtering the mixed signal and extracting a measurement signal having a frequency corresponding to a nominal value associated with the radar signal, the reference signal and the measuring section (1);
a measuring circuit (9, 10) for determining the intensity of the radar signal having passed the measuring section (1) by measuring an intensity of the measurement signal.

8. System according to claim 7, in which the reference trigger (13, 16) contains a phase-locked loop (16, 17) for generating the reference signal.

9. System according to claim 7, in which the reference trigger (13, 16) contains a reference line (13) linked to the transmitter (5) for coupling the reference signal out of the radar signal.

10. System according to claim 9, in which the reference line (13) contains a delay element (14).

11. System according to claim 9 or 10, in which the antenna arrangement (6, 7, 20, 21, 22) comprises a reflector (21) by which the radar signal transmitted by the transmitter (5) and having passed the measuring section (1) a first time can be reflected so that it passes the measuring section (1) a second time, and in which the receiver (8) is disposed in spatial proximity to the transmitter (5).

12. System according to claim 7, which contains a clock generator (18) by which a clock signal can be applied both to the transmitter (5) and to the reference trigger (13, 16), and in which both the transmitter (5) and the reference trigger (13, 16) have a multiplier by which the radar signal and the reference signal can be generated by means of respective multiplication of the clock signal.

13. System according to claim 12, which has a clock modulator (19) assigned to the clock generator (18) for generating the clock signal having a largely linearly varying clock frequency.

14. System according to one of claims 7 to 12, which has a transmit modulator (11) assigned to the transmitter (5).

15. System according to one of claims 7 to 14, which is implemented as a radar barrier.
